# EUROPÄISCHE PATENTSCHRIFT

(11) **EP 3 551 512 B1**
(45) Veröffentlichungstag und Bekanntmachung des Hinweises auf die Patenterteilung: **11.11.2020**
(21) Anmeldenummer: 17811872.5
(22) Anmeldetag: 24.11.2017
(51) Int. Cl.: B60T 7/04, B60T 8/36, B60T 11/20

(54) **HAUPTBREMSZYLINDERANORDNUNG MIT POSITIONSGEBERELEMENT UND DICHTUNGSANORDNUNG**
MASTER CYLINDER ARRANGEMENT WITH POSITION SENSOR AND SEALING ARRANGEMENT
ARRANGEMENT DE MAÎTRE-CYLINDRE AVEC UN CAPTEUR DE POSITION ET ARRANGEMENT D'ÉTANCHÉITÉ

(30) Priorität: 06.12.2016 DE 102016014485
(43) Veröffentlichungstag der Anmeldung: 16.10.2019
(73) Patentinhaber: ZF Active Safety GmbH, 56070 Koblenz (DE)
(72) Erfinder: SEIBERT, Werner, 56206 Kammerforst (DE)
(74) Vertreter: ZF Friedrichshafen AG
(86) Internationale Anmeldenummer: PCT/EP2017/080316
(87) Internationale Veröffentlichungsnummer: WO 2018/104072

(56) Entgegenhaltungen:
- WO-A1-2009/059619
- US-A1- 2003 000 375
- US-A1- 2014 331 758

## Beschreibung

### Technisches Gebiet

Die vorliegende Offenbarung betrifft allgemein das technische Gebiet von Hauptbremszylinderanordnungen und insbesondere Hauptbremszylinderanordnungen für Kraftfahrzeugbremsanlagen. Genauer gesagt betrifft die vorliegende Offenbarung eine Hauptbremszylinderanordnung, bei der eine Bremspedalbetätigung mittels eines Positionsgeberelements erfassbar ist.

### Stand der Technik

Lösungen zur Erfassung einer Bremspedalbetätigung sind aus dem Stand der Technik bekannt. Eine solche Erfassung ist beispielsweise erforderlich, um das Vorliegen eines Fahrerwunsches hinsichtlich einer Fahrzeugbremsung und gegebenenfalls auch das gewünschte Ausmaß der Fahrzeugbremsung zu erfassen. Diese Information kann verwendet werden, um die bei einem fahrerentkoppelten Bremsbetrieb bereitzustellenden Bremskräfte zu ermitteln (Brake-By-Wire). Derartige Bremskräfte werden typischerweise über einen elektromechanischen Bremsaktuator erzeugt.

In diesem Zusammenhang ist es ferner bekannt, ein Positionsgeberelement bereitzustellen, das nach Maßgabe der Bremspedalbetätigung verlagerbar ist, wobei diese Verlagerung mittels einer Erfassungseinheit erfasst wird. Hierfür kommen beispielsweise stabförmige Positionsgeberelemente in Betracht, die mit dem Kolben eines Hauptbremszylinders für eine gemeinsame Verlagerung gekoppelt sind.

Beispiele hierfür finden sich in den Dokumenten DE 10 2008 020 934 A1, DE 37 23 842 A1 oder DE 37 23 916 A1.

Das Vorsehen zusätzlicher verlagerbarer Positionsgeberelemente innerhalb der Hauptbremszylinderanordnung sowie einer oftmals elektrisch betriebenen Erfassungseinheit erhöht jedoch das Risiko von Fehlfunktionen.

Ein weiteres Beispiel für die Erfassung der Bremspedalposition ist in der Druckschrift US 2003/000375 A1 offenbart. Hier ist ein berührungsfreier Hall-Effekt-Positionssensor für ein hydraulisches Kraftfahrzeugbremssystem offenbart, wobei der Positionssensor in einen Hauptzylinder integriert ist.

### Kurzer Abriss

Es ist ein Hauptbremszylinderanordnung anzugeben, die eine zuverlässigere Erfassung einer Bremspedalbetätigung ermöglicht.

Hierfür wird eine Hauptbremszylinderanordnung für eine Kraftfahrzeugbremsanlage bereitgestellt, die folgendes umfasst:
- wenigstens einen Kolben, der entlang einer Verlagerungsachse verlagerbar ist und gemeinsam mit einer Gehäuseanordnung eine Druckkammer begrenzt;
- ein Krafteingangsglied, das nach Maßgabe einer Bremspedalbetätigung verlagerbar und mit dem Kolben für eine gemeinsame Verlagerung gekoppelt oder koppelbar ist;
- ein langgestrecktes Positionsgeberelement, das nach Maßgabe einer Betätigung des Krafteingangsgliedes verlagerbar ist;
- eine Erfassungseinheit, die dazu ausgebildet ist, eine Verlagerung des Positionsgeberelements zu erfassen; und
- einen Aufnahmebereich, der dazu ausgebildet ist, das Positionsgeberelement zumindest abschnittsweise aufzunehmen.

Dabei ist ein erstes Ende des Positionsgeberelements in einem ersten Gehäusebereich der Hauptbremszylinderanordnung angeordnet und die Erfassungseinheit ist in einem zweiten Gehäusebereich der Hauptbremszylinderanordnung angeordnet und der Aufnahmebereich verbindet den ersten und zweiten Gehäusebereich miteinander. Die Hauptbremszylinderanordnung umfasst ferner wenigstens eine erste Dichtungsanordnung, die in einem Fluidpfad zwischen dem ersten und zweiten Gehäusebereich angeordnet ist.

Bei dem Kolben kann es sich um einen Druck- und/oder Bremskolben handeln, der in einer Zylinderbohrung der Hauptbremszylinderanordnung verlagerbar geführt ist. Die Gehäuseanordnung kann ein Zylindergehäuse der Hauptbremszylinderanordnung umfassen. Der Kolben und die Zylinderbohrung (und/oder das Zylindergehäuse) können gemeinsam die Druckkammer begrenzen. Nach Maßgabe einer Verlagerung des Kolbens kann das Volumen der Druckkammer variiert werden, sodass in bekannter Weise ein Druck auf den Pedalgegenkraftsimulator oder bei einem Systemversagen direkt ein Bremsdruck in einem mit der Hauptbremszylinderanordnung gekoppelten hydraulischen Bremskreislauf verändert werden kann.

Es versteht sich, dass die Hauptbremszylinderanordnung auch mehrere solcher Kolben umfassen kann, die beispielsweise nach Tandembauart angeordnet sind. Diese können auch eine entsprechende Mehrzahl von Druckkammern definieren.

Das Krafteingangsglied kann als allgemein zylindrisches Element und/oder kolbenartig ausgebildet sein. Das Koppeln mit dem Kolben kann kraftschlüssig erfolgen (beispielsweise durch Verstemmen oder gemeinsames in Anlage Bringen). Auch mit dem Bremspedal kann ein zumindest mittelbares mechanisches Koppeln erfolgen. Allgemein kann das Krafteingangsglied ebenfalls entlang der Verlagerungsachse verlagerbar sein, wobei es eine Bremspedalbetätigung in eine Verlagerung des Kolbens entlang der Verlagerungsachse umsetzen kann.

Das Positionsgeberelement kann als ein allgemein zylindrisches Element ausgebildet sein. Gemäß einem Beispiel ist das Positionsgeberelement im Wesentlichen stabförmig und insbesondere zumindest abschnittsweise mit einem gerundeten, ovalen oder kreisrunden Querschnitt ausgebildet. Ferner kann das Positionsgeberelement ein metallisches und insbesondere ein magnetisches Material umfassen und/oder allgemein dazu eingerichtet sein, mit der Erfassungseinheit für eine Positionserkennung zu wechselwirken. Hierzu kann die Erfassungseinheit einen Magnetfeldsensor umfassen.

Das Positionsgeberelement kann mit wenigstens einem Kolben oder dem Krafteingangsglied koppelbar oder gekoppelt sein, um gemeinsam mit diesen verlagert zu werden. Hierfür können an dem Kolben oder dem Krafteingangsglied Mitnehmerelemente vorgesehen sein, beispielsweise in Form von (z.B. radial) vorspringenden Bereichen und/oder an dem Kolben oder dem Krafteingangsglied angeordneten Mitnehmerscheiben. Die Verlagerung des Positionsgeberelements kann ebenfalls im Wesentlichen entlang der Verlagerungsachse erfolgen. Insbesondere kann das Positionsgeberelement entlang einer von der Verlagerungsachse beabstandeten aber hierzu parallelen Achse verlagert werden.

Die Erfassungseinheit kann die Bewegungen des Positionsgeberelements mittels einer geeigneten Sensoreinheit erfassen, beispielsweise einer Magnetfeldsensoreinheit, umfassend einen Hall-Sensor. Die Erfassungseinheit kann ferner von einer elektromechanischen Bremsaktuatoreinheit umfasst sein oder mit dieser wechselwirken. Insbesondere kann die Erfassungseinheit Bestandteil einer Sensoreinheit zum Erfassen eines Betriebsparameters der Bremsaktuatoreinheit sein, wie beispielsweise einer aktuellen Position eines Elektromotors dieser Einheit. Die Erfassungseinheit kann ferner dazu ausgebildet sein, nach Maßgabe der Verlagerung des Positionsgeberelements Signale generieren. Diese können von einer Steuereinheit ausgewertet werden. Diese Steuereinheit kann von der Erfassungseinheit umfasst oder zumindest hiermit verbindbar sein.
Der Aufnahmebereich kann eine langgestreckte Ausnehmung oder Bohrung umfassen, die zumindest abschnittsweise einen im Wesentlichen ovalen oder kreisförmigen und/oder vorzugsweise geschlossenen Querschnitt aufweisen kann. Der Aufnahmebereich kann sich entlang einer Längsachse des Positionsgeberelements erstrecken. Insbesondere kann eine Längsachse des Aufnahmebereichs im Wesentlichen parallel zu der Längsachse des Positionsgeberelements verlaufen oder mit dieser zusammenfallen. Die Längsachse kann zusätzlich oder alternativ parallel zu der Verlagerungsachse von Kolben und/oder Krafteingangsglied verlaufen. Das Positionsgeberelement kann in dem Aufnahmebereich verlagerbar geführt aufgenommen sein, beispielsweise über eine in den Aufnahmebereich eingesetzte Führungsbuchse.

Der erste Gehäusebereich kann das erste Ende des Positionsgeberelements zumindest teilweise aufnehmen und/oder umgeben. Bei dem ersten Ende kann es sich um ein mit dem Kolben und/oder dem Krafteingangselement gekoppeltes Ende des Positionsgeberelements handeln. Demnach können der Kolben und/oder das Krafteingangsglied zumindest in einer bremsinaktiven Stellung ebenfalls wenigstens teilweise in dem ersten Gehäusebereich aufgenommen sein.

Der erste und zweite Gehäusebereich können jeweils einteilig oder mehrteilig ausgebildet sein und insbesondere auch ein oder mehrere gemeinsame Gehäuseteile umfassen. Die Gehäusebereiche können zumindest teilweise in einem im Wesentlichen massiven Hauptzylindergehäuse ausgebildet sein, welches beispielsweise gusstechnisch hergestellt ist. Auch dieses Hauptzylindergehäuse kann einteilig oder mehrteilig ausgebildet sein. Der erste und zweite Gehäusebereich können ferner jeweils Bereiche definieren, die beispielsweise definierte Arbeitsräume oder Kammern begrenzen und/oder in denen die ihnen jeweils zugeordneten Elemente der Hauptbremszylinderanordnung aufnehmbar sind.

Gemäß einer Ausführungsform umfasst der erste Gehäusebereich ein Hauptgehäuseteil sowie einen daran befestigten Deckel- oder Zylinderabschnitt. Dieser Deckelabschnitt kann eine Eingangsöffnung für das Krafteingangsglied umfassen und das Krafteingangsglied zumindest in einer bremsinaktiven Stellung zumindest teilweise axial überspannen. Der Hauptgehäuseteil kann hingegen im Wesentlichen massiv ausgebildet sein und zum Beispiel einen Abschnitt der Zylinderbohrung umfassen.

Der erste Gehäusebereich kann ferner eine Eingangskammer umfassen, die von der Druckkammer fluidisch abgedichtet ist, und in die das erste Ende des Positionsgeberelements hineinragt. Ausgehend von dieser Eingangskammer kann sich der Aufnahmebereich zu dem zweiten Gehäusebereich erstrecken.

Der zweite Gehäusebereich kann zusätzlich zu der Erfassungseinheit auch ein zweites Ende des Positionsgeberelements aufnehmen, das mit der Erfassungseinheit wechselwirkt. Insbesondere kann ein Wechselwirkungsbereich zwischen dem zweiten Ende des Positionsgeberelements und der Erfassungseinheit in dem zweiten Gehäusebereich angeordnet sein.

Allgemein versteht es sich, dass der Aufnahmebereich sowie der erste und zweite Gehäusebereich auch zumindest teilweise einander überlappen können. Ferner kann das zweite Ende des Positionsgeberelements je nach aktueller Stellung des Bremspedals auch zumindest vorübergehend in dem Aufnahmebereich anordenbar sein, um anschließend in den zweiten Gehäusebereich verlagert zu werden. Somit vorgesehen sein, dass die vorstehend geschilderte Aufnahme des ersten und zweiten Endes des Positionsgeberelements in den jeweiligen ersten und zweiten Gehäusebereichen wenigstens in einer bremsinaktiven Ruheposition der Hauptbremszylinderanordnung vorgesehen ist.

Der Aufnahmebereich kann einen Verbindungskanal zwischen dem ersten und zweiten Gehäusebereich bilden. Der Aufnahmebereich kann den Fluidpfad zwischen den Gehäusebereichen somit zumindest abschnittsweise bilden und/oder sich entlang diesem erstrecken. Insbesondere kann der Aufnahmebereich eine fluidleitende Verbindung zwischen diesen Gehäusebereich bereitstellen, die jedoch mittels der ersten Dichtungsanordnung gezielt unterbrochen sein kann.

Der Fluidpfad kann einen Freiraum, Kanal, fluidleitenden Bereich oder dergleichen umfassen, über den (zum Beispiel in Abwesenheit der ersten Dichtungsanordnung) Fluide zwischen den Gehäusebereichen austauschbar sind.

Die erste Dichtungsanordnung kann allgemein einen Dichtring (z.B. O-Ring), eine Lippendichtung und/oder einen Wellendichtring umfassen oder als ein solches Element ausgebildet sein. Die Dichtungsanordnung kann somit auch nur ein einzelnes derartiges Dichtelement umfassen. Die Dichtungsanordnung kann dazu ausgebildet sein, den ersten und zweiten Gehäusebereich fluidisch voneinander abzudichten. Dies kann ein zumindest anteiliges fluidisches Abdichten betreffen (zum Beispiel in Zusammenspiel mit weiteren Dichtungsanordnungen) aber auch ein im Wesentlichen vollständiges (zum Beispiel unabhängig von weiteren Dichtungsanordnungen).

Das fluidische Abdichten kann insbesondere derart erfolgen, dass (zumindest bis zum Erreichen eines etwaigen Schwellendrucks) ein Luftaustausch unterbunden wird und/oder ein in den ersten Gehäusebereich mit der Zeit eintretendes Leckagevolumen von Bremsflüssigkeit nicht in den zweiten Gehäusebereich gelangt. Zusätzlich oder alternativ kann die erste Dichtungsanordnung aber auch eine abdichtende Wirkung zwischen zumindest dem zweiten Gehäusebereich und der Umgebung bereitstellen. Auch diese abdichtende Wirkung kann aber selektiv unterbrochen werden, zum Beispiel um eine nachfolgend erläuterte Entlüftungsfunktion bereitzustellen.

Die erste Dichtungsanordnung kann dazu eingerichtet sein, einem vorbestimmten Schwellendruck standzuhalten. Erst ab Überschreiten dieses vorbestimmten Schwellendrucks kann die erste Dichtungsanordnung nachgeben und eine fluidische Verbindung beziehungsweise ein Überströmen ermöglichen. Dies kann insbesondere eine fluidische Verbindung der Gehäusebereiche über den Aufnahmebereich betreffen.

Die erste Dichtungsanordnung ist in dem Aufnahmebereich angeordnet. Zusätzlich oder alternativ kann die erste Dichtungsanordnung mit dem Positionsgeberelement und/oder einem das Positionsgeberelement aufnehmendes beziehungsweise führendes Element abdichtend wechselwirken. Bei diesem Element kann es sich um eine nachfolgend erläuterte Hülse handeln.

Zusammengefasst kann die erste Dichtungsanordnung dazu ausgebildet sein, eine fluidische Verbindung des ersten und zweiten Gehäusebereichs über den Aufnahmebereich zu unterbinden und/oder eine fluidische Verbindung zwischen dem zweiten Gehäusebereich und der Umgebung. Mit anderen Worten kann die erste Dichtungsanordnung derart angeordnet und ausgebildet sein, dass im Wesentlichen keine Flüssigkeiten und/oder keine Luft zwischen den Gehäusebereichen über den Aufnahmebereich ausgetauscht und insbesondere keine Flüssigkeiten von dem ersten in den zweiten Gehäusebereich gelangen können. Diese abdichtende Wirkung kann zumindest bis zu einem vorbestimmten Schwellendruck aufrechterhalten werden.

Gemäß einer Weiterbildung sind der erste und zweite Gehäusebereich zumindest teilweise in separaten ersten und zweiten Gehäuseteilen ausgebildet. Mit anderen Worten können der erste und zweite Gehäusebereich jeweils wenigstens einen Gehäuseteil umfassen, der nicht dem jeweils anderen Gehäusebereich zugeordnet oder von diesem umfasst ist. Die Gehäuseteile können durch separat handhabbare Elemente oder Baugruppen gebildet werden, die beispielsweise zusammensetzbar und/oder aneinander befestigbar sind. Die Gehäuseteile können gemeinsam eine Gehäuseanordnung der Hydraulikzylinderanordnung zumindest größtenteils oder im Wesentlichen vollständig bilden. Die Gehäuseteile können ferner mehrteilig unterteilt sein. In diesem Zusammenhang können die Gehäuseteile jedoch jeweils einen volumengrößten Hauptgehäuseteil umfassen, der beispielsweise gusstechnisch hergestellt ist.

Zusammengefasst kann somit ein erster Gehäuseteil bereitgestellt sein, der den ersten Gehäusebereich zumindest teilweise, größtenteils oder im Wesentlichen vollständig bildet. Der erste Gehäuseteil kann beispielsweise eine Eingangskammer für das Krafteingangsglied begrenzen, einen Kopplungsbereich zwischen dem Krafteingangsglied und dem Kolben umfassen und/oder das erste Ende des Positionsgeberelements aufnehmen. Der zweite Gehäuseteil kann hingegen den zweiten Gehäusebereich zumindest teilweise, größtenteils oder im Wesentlichen vollständig bilden. Ferner kann hierin die Erfassungseinheit aufgenommen sein und optional auch zumindest ein Teil das zweite Ende des Positionsgeberelements.

Gemäß einer Weiterbildung ist die erste Dichtungsanordnung dazu ausgebildet, den zweiten Gehäusebereich ab Überschreiten eines Schwellendrucks fluidleitend mit der Umgebung zu verbinden. Insbesondere kann hierüber eine gas- oder luftleitende Verbindung bereitgestellt werden. Ferner kann hierbei insbesondere ein fluidleitendes Verbinden eines Innenraums des zweiten Gehäusebereichs mit der Umgebung bereitgestellt werden. Beispielsweise kann ein innerer Aufnahmebereich des zweiten Gehäusebereichs, der zur Aufnahme der Erfassungseinheit dient, luftleitend mit der Umgebung verbunden werden.

Im Ergebnis kann somit eine selektive Entlüftungsfunktion des zweiten Gehäusebereiches bereitgestellt werden, insbesondere bei darin auftretendem Überdruck. Das selektive fluidleitende Verbinden ab Überschreiten des Schwellendrucks kann beispielsweise dadurch erreicht werden, dass eine Dichtlippe der ersten Dichtungsanordnung ihre dichtende Funktion nur bis zu dem Schwellendruck aufrechterhält und anschließend nachgibt (zum Beispiel durch Umklappen). Fällt hingegen der Druck wieder unter den Schwellendruck, kann die Dichtungsanordnung dazu ausgebildet sein, ihre dichtende Wirkung wieder bereitzustellen.

In diesem Zusammenhang kann ferner vorgesehen sein, dass das fluidleitende Verbinden mit der Umgebung über einen Entlüftungskanal erfolgt. Der Entlüftungskanal kann fluidleitend mit der ersten Dichtungsanordnung und/oder der Umgebung in Verbindung stehen. Der Entlüftungskanal kann eine Bohrung, einen Zwischenraum und/oder eine langgestreckte Ausnehmung umfassen.

Gemäß einer Variante wird der Entlüftungskanal von zumindest einem der vorstehend diskutierten Gehäuseteile begrenzt. Beispielsweise können die Gehäuseteile einen Schnittstellenbereich umfassen, wobei der Entlüftungskanal innerhalb dieses Schnittstellenbereichs ausgebildet ist und/oder hiervon umgeben beziehungsweise begrenzt wird. Der Schnittstellenbereich kann zum Beispiel in einer Stirnfläche von wenigstens einem der Gehäuseteile ausgebildet sein oder hiervon begrenzt werden, wobei die Stirnfläche mit dem weiteren Gehäuseteil in Anlage gebracht werden kann. Die Stirnfläche sowie ein entsprechend gegenüberliegender Bereich des weiteren Gehäuseteils können somit den Entlüftungskanal zumindest anteilig gemeinsam begrenzen.

Die erste Dichtungsanordnung kann in einer Ausnehmung aufgenommen sein, wobei die Ausnehmung mit dem Entlüftungskanal fluidleitend verbunden ist. Die Ausnehmung kann einen Aufnahmebereich für die erste Dichtungsanordnung bereitstellen. Der Entlüftungskanal kann unmittelbar in die Ausnehmung münden oder, anders ausgedrückt, sich ausgehend von dieser erstrecken. Die Ausnehmung kann in der Gehäuseanordnung der Hauptbremszylinderanordnung ausgebildet sein. Insbesondere kann die Ausnehmung in wenigstens einem der vorstehend diskutierten Gehäusebereiche und/oder Gehäuseteile bereitgestellt sein. Übergeordnet kann die Ausnehmung ferner mit dem Aufnahmebereich in Verbindung stehen oder von diesem umfasst sein.

Spätestens ab einem selektiven fluidleitenden Verbinden, zum Beispiel durch Überströmen der ersten Dichtungsanordnung ab Überschreiten eines Schwellendrucks, kann somit Luft aus dem zweiten Gehäusebereich über die erste Dichtungsanordnung in die Ausnehmung strömen und hiervon über den Entlüftungskanal in die Umgebung gelangen.

Eine weitere Variante sieht vor, dass die Hauptbremszylinderanordnung ferner eine zweite Dichtungsanordnung umfasst, die dazu ausgebildet ist, den ersten und zweiten Gehäusebereich fluidisch voneinander abzudichten. Dies kann ein zumindest anteiliges fluidisches Abdichten betreffen (zum Beispiel in Zusammenspiel mit weiteren Dichtungsanordnungen) aber auch ein im Wesentlichen vollständiges Abdichten (zum Beispiel im Wesentlichen unabhängig von weiteren Dichtungsanordnungen). Die zweite Dichtungsanordnung kann wiederum einen O-Ring, eine Lippendichtung und/oder einen Wellendichtring umfassen oder als ein solches (insbesondere einzelnes) Dichtelement ausgebildet sein. Darüber hinaus können, sofern nicht anders angegeben, sämtliche der vorstehend oder nachstehend genannten Merkmale, Alternativen und Weiterbildungen bezüglich der ersten Dichtungsanordnung auch auf die zweite Dichtungsanordnung zutreffen.

Die zweite Dichtungsanordnung kann ferner unmittelbar mit einer Außenumfangsfläche des Positionsgeberelements wechselwirken und insbesondere daran anliegen. Ferner kann die zweite Dichtungsanordnung allgemein in dem Aufnahmebereich aufgenommen sein und/oder in einer nachfolgend erläuterten Hülse. Ausgehend von dem ersten Gehäusebereich und in Richtung des zweiten Gehäusebereichs betrachtet, kann die zweite Dichtungsanordnung ferner der ersten Dichtungsanordnung vorgelagert sein.

Die erste und zweite Dichtungsanordnung können Bestandteil eines Dichtungssystems zwischen den beiden Gehäusebereichen und insbesondere innerhalb des Aufnahmebereiches sein. Das Dichtungssystem kann ferner auch weitere Dichtungsanordnungen umfassen, zum Beispiel eine nachfolgend erläuterte dritte Dichtungsanordnung.

Die zweite Dichtungsanordnung kann dazu ausgelegt sein, einem größeren Druck standzuhalten als die erste Dichtungsanordnung. Mit anderen Worten kann ein Schwellendruck, bis zu dem die zweite Dichtungsanordnung ihre Dichtwirkung aufrechterhalten kann, einen Schwellendruck der ersten Dichtungsanordnung übersteigen. Somit kann beispielsweise vorgesehen sein, dass ab Erreichen eines vorbestimmten Schwellendrucks lediglich die erste Dichtungsanordnung ihre Dichtwirkung verliert, nicht aber die zweite. Insbesondere kann vorgesehen sein, dass die erste Dichtungsanordnung ab Auftreten eines vorbestimmten Überdruckes in dem zweiten Gehäusebereich die geschilderte Entlüftungsfunktion zur Umgebung bereitstellt, die zweite Dichtungsanordnung aber ihre dichtende Wirkung aufrechterhält. Hierdurch kann ermöglicht werden, dass Luft aus dem zweiten Gehäusebereich in die Umgebung aber nicht in den ersten Gehäusebereich entweicht.

Gemäß einer Weiterbildung ist die zweite Dichtungsanordnung in einem den ersten Gehäusebereich umfassenden Gehäuseteil und die erste Dichtungsanordnung in einem den zweiten Gehäusebereich umfassenden Gehäuseteil angeordnet. Anders ausgedrückt kann die erste Dichtungsanordnung, die vorzugsweise zwecks Entlüftung selektiv überströmt werden kann, näher zu dem mit der Erfassungseinheit wechselwirkenden zweiten Ende des Positionsgeberelements angeordnet sein als die zweite Dichtungsanordnung (und/oder näher zu der Erfassungseinheit als solches). Die zweite Dichtungsanordnung kann hingegen näher zu dem ersten Ende des Positionsgeberelements und/oder dem Krafteingangsglied angeordnet sein als die erste Dichtungsanordnung. Die Nähe kann sich dabei jeweils auf einen Abstand entlang einer Verlagerungsachse oder Längsachse des Aufnahmebereichs beziehen.

Übergeordnet kann die erste Dichtungsanordnung somit eine insbesondere abdichtende Wirkung zwischen dem zweiten Gehäusebereich und der Umgebung bereitstellen. Dabei kann es sich insbesondere um eine luft-abdichtende Wirkung handeln. Zumindest bis zu dem Erreichen eines Schwellendrucks kann die erste Dichtungsanordnung aber auch eine abdichtende Wirkung zwischen den beiden Gehäusebereichen bereitstellen. Die zweite Dichtungsanordnung kann hingegen insbesondere eine abdichtende Wirkung zwischen dem ersten und zweiten Gehäusebereich bereitstellen. Dabei kann es sich insbesondere um eine flüssigkeitsabdichtende Wirkung handeln. Andererseits kann die zweite Dichtungsanordnung außerhalb eines fluidischen Verbindungspfades zwischen dem zweiten Gehäusebereich und der Umgebung angeordnet sein, also zum Beispiel keine signifikante luft-abdichtende Wirkung zwischen diesen Bereichen bereitstellen.

Die Hauptbremszylinderanordnung kann ferner wenigstens eine weitere, dritte Dichtungsanordnung umfassen. Auch diese kann den ersten und zweiten Gehäusebereich fluidisch voneinander abdichten. Die dritte Dichtungsanordnung kann ebenfalls in dem Aufnahmebereich angeordnet sein. Zusätzlich oder alternativ kann die dritte Dichtungsanordnung entlang der Verlagerungsachse oder Längsachse des Aufnahmebereichs betrachtet zwischen der ersten und zweiten Dichtungsanordnung angeordnet sein. Gemäß einer Variante ist die dritte Dichtungsanordnung als O-Ring ausgebildet, wohingegen die erste und zweite Dichtungsanordnung als Lippendichtungen ausgebildet sind.

Eine Weiterbildung sieht vor, dass die erste Dichtungsanordnung (und optional auch die zweite und/oder die dritte Dichtungsanordnung) an einer Hülse angeordnet ist. Die Hülse kann zumindest teilweise in dem Aufnahmebereich angeordnet sein. Wie nachfolgend erläutert, kann die Hülse auch das Positionsgeberelement zumindest abschnittsweise aufnehmen und, optional, auch eine Führungswirkung während der Verlagerung des Positionsgeberelements bereitstellen. Dabei kann die Hülse oder zumindest eine hiervon umfasste Gleithülse auch unmittelbar an einer Außenumfangsfläche des Positionsgeberelements anliegen (z.B. über eine Innenumfangsfläche der Hülse bzw. Gleithülse). Ein solches mittelbares oder unmittelbares Anliegen von der Hülse an dem Positionsgeberelement ist aber nicht zwingend. Die Hülse kann allgemein auch als Führungshülse oder Führungsbuchse bezeichnet werden. Die Hülse kann ferner langgestreckt ausgebildet sein und zum Beispiel allgemein als Hohlzylinder. Eine Längsachse der Hülse kann parallel zu der Verlagerungsachse und/oder einer Längsachse des Aufnahmebereiches verlaufen und mit Letzterer auch zusammenfallen.

Die erste Dichtungsanordnung kann an einer Außenumfangsfläche der Hülse angeordnet sein. Die Außenumfangsfläche der Hülse kann wenigstens eine Durchmesserstufe umfassen. Diese kann zur Positionssicherung der Hülse in dem Aufnahmebereich und/oder als Anlagefläche dienen, beispielsweise für eine der Dichtungsanordnungen. Die Hülse kann ferner eine Durchgangsbohrung umfassen, durch die zum Beispiel das Positionsgeberelement hindurchgeführt werden kann. Die Durchgangsbohrung kann eine Innenumfangsfläche umfassen, an der beispielsweise die zweite Dichtungsanordnung angeordnet ist. Eine etwaige dritte Dichtungsanordnung, zum Beispiel in Form eines O-Rings, kann hingegen wiederum an der Außenumfangsfläche der Hülse angeordnet sein. Die Durchgangsbohrung kann allgemein durch die hohlzylindrische Gestalt der Hülse gebildet werden, also auch ohne gesonderte zum Beispiel spanende Bearbeitungsschritte oder gar Bohrvorgänge bereitgestellt werden, was aber ebenfalls durchaus möglich ist.

Gemäß einer weiteren Variante erstreckt sich die Hülse durch beide Gehäuseteile. Insbesondere kann die Hülse dazu ausgebildet sein, in einen der beiden Gehäuseteile eingesetzt und im Rahmen des Verbindens der Gehäuseteile in den jeweils anderen Gehäuseteil eingeführt zu werden. Hierzu kann die Hülse eine geeignete Struktur umfassen, um beispielsweise eine Einschubtiefe in zumindest einen der beiden Gehäusebereiche zu begrenzen. Diese Struktur kann in Form einer Durchmesserstufe bereitgestellt sein.

Allgemein kann die Hülse einen Grenzbereich zwischen den Gehäuseteilen überbrücken beziehungsweise überspannen, insbesondere bei einer Aufnahme der Hülse in dem Aufnahmebereich. Ebenso kann sie je Gehäuseteil zumindest einen Abschnitt umfassen, der sich in den entsprechen Gehäuseteil hinein erstreckt.

Die Hülse kann ferner einen Fluidkanal umfassen, der sich von einem dem zweiten Gehäusebereich zugewandten Bereich der Hülse bis wenigstens zu der ersten Dichtungsanordnung erstreckt. Der Fluidkanal kann eine fluidleitende Verbindung bereitstellen. Gemäß einer Variante bildet der Fluidkanal einen Bereich der Hülse, durch den beziehungsweise entlang dem ein Fluid und insbesondere Luft aus dem ersten Gehäusebereich zu der zweiten Dichtungsanordnung strömen kann. Der Fluidkanal kann eine Vertiefung, eine Ausnehmung, eine Bohrung und/oder eine Nut umfassen.

Gemäß einer Variante ist der Fluidkanal zumindest teilweise an einer Außenumfangsfläche der Hülse ausgebildet. Zusätzlich oder alternativ kann der Fluidkanal zumindest abschnittsweise schraubenlinienförmig und/oder wendel- oder helixförmig ausgebildet sein. Dabei kann der Fluidkanal eine Umfangsfläche der Hülse mehrfach in Umfangsrichtung umlaufen, während er sich axial zu der ersten Dichtungsanordnung erstreckt. Gemäß einer Variante erstreckt sich der Fluidkanal als längliche Nut oder Vertiefung schraubenlinienförmig entlang der Außenumfangsfläche und stellt dadurch einen fluidleitenden Kanal zu der ersten Dichtungsanordnung bereit.

Eine Weiterbildung sieht vor, dass ein Endbereich des Fluidkanals sich in wenigstens einen von dem Aufnahmebereich und dem zweiten Gehäusebereich hinein erstreckt. Dies kann mit einer fluidleitenden Verbindung zwischen dem Fluidkanal und dem Aufnahmebereich und/oder dem zweiten Gehäusebereich einhergehen. Bei dem Endbereich kann es sich um ein von der ersten Dichtungsanordnung abgewandten freien Endbereich handeln. Ausgehend von diesem Endbereich kann Luft zu der Dichtungsanordnung strömen, wobei es sich insbesondere um Luft aus dem zweiten Gehäusebereich handeln kann.

Die Hülse kann ferner wenigstens einen Gleitabschnitt umfassen, entlang dem das Positionsgeberelement verlagerbar geführt ist. Der Gleitabschnitt kann unmittelbar an einer Außenumfangsfläche des Positionsgeberelements anliegen. Der Gleitabschnitt kann ein reibungsminderndes Material und insbesondere eine reibungsmindernde Beschichtung umfassen. Beispielsweise kann der Gleitabschnitt ein Teflon-Material oder eine Teflon-Beschichtung umfassen. Der Gleitabschnitt kann in einem gesonderten Gleitelement bereitgestellt sein, beispielsweise in einer Gleithülse oder Gleitbuchse. Das Gleitelement kann in der Hülse eingesetzt sein, insbesondere in einer etwaigen Durchgangsbohrung hiervon. Gemäß einer Variante umfasst die Hülse wenigstens zwei Gleitelemente, die entlang der Hülsen- und/oder Aufnahmebereichslängsachse axial voneinander beabstandet sind.

### Kurze Beschreibung der Figuren

Weitere Vorteile, Einzelheiten und Merkmale der hier beschriebenen Lösung ergeben sich aus der nachfolgenden Beschreibung von Ausführungsbeispielen sowie aus den Figuren. Es zeigen:
- Fig. 1: eine perspektivische Gesamtansicht einer erfindungsgemäßen Hauptbremszylinderanordnung gemäß eines Ausführungsbeispiels;
- Fig. 2: eine Schnittansicht durch die Hauptbremszylinderanordnung aus Figur 1;
- Fig. 3: eine Detailansicht der Führungshülse gemäß dem Ausführungsbeispiel; und
- Fig. 4: eine Einzelteilansicht von Führungshülse und Positionsgeberelement in Schnittdarstellung.

### Detaillierte Beschreibung

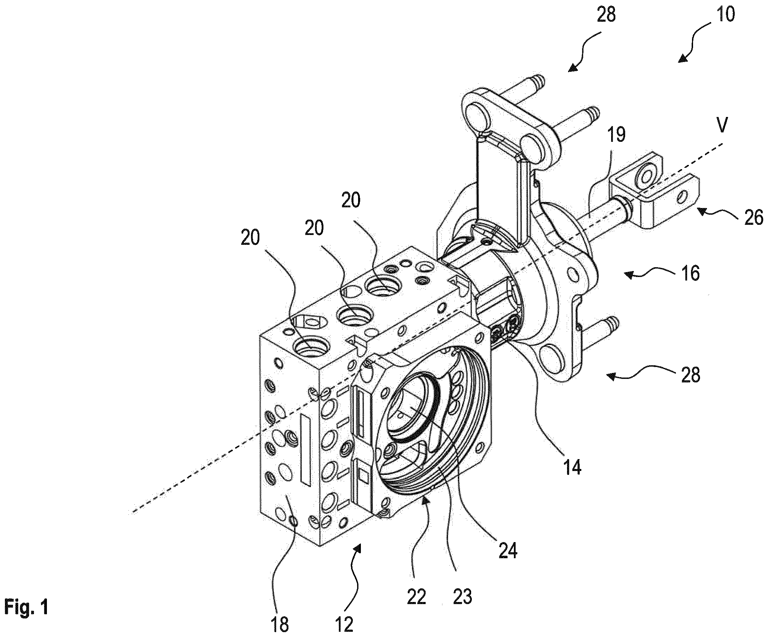

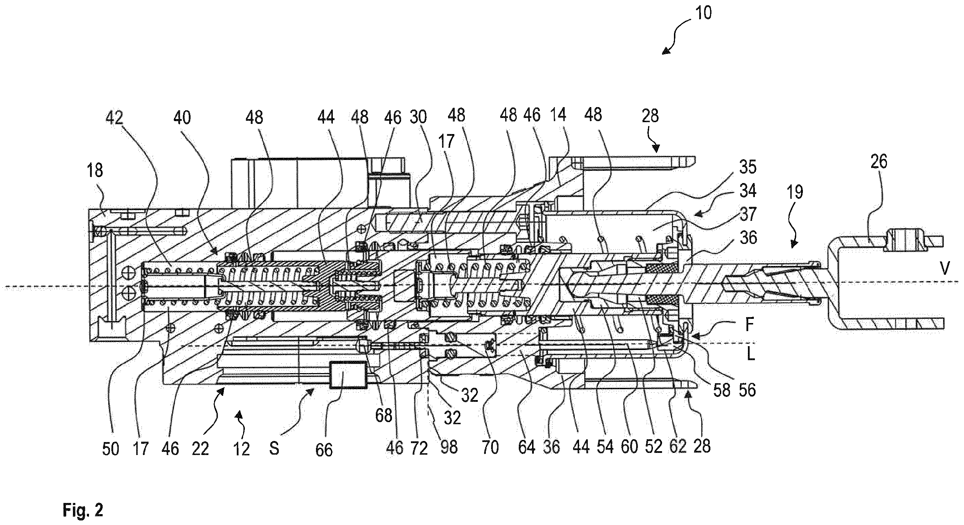

In Figur 1 ist eine Hauptbremszylinderanordnung 10 gemäß eines Ausführungsbeispiels gezeigt. Die Hauptbremszylinderanordnung 10 umfasst eine Gehäuseanordnung 12, die eine nachfolgend erläuterte Kolbenanordnung 40 aufnimmt (siehe Figur 2). In dem gezeigten Ausführungsbeispiel umfasst die Gehäuseanordnung 12 einen ersten Gehäuseteil 14, der abschnittsweise zylindrisch ausgebildet ist und der einen Eingangsbereich 16 für ein Krafteingangsglied 19 bereitstellt. Der erste Gehäuseteil 14 ist als separat handhabbares Element von einem zweiten Gehäuseteil 18 ausgebildet, jedoch fest mit diesem verschraubt. Der zweite Gehäuseteil 18 ist im Wesentlichen blockförmig ausgebildet und begrenzt anteilig eine nachfolgend erläuterte Druckkammer 17 der Kolbenanordnung 40 (siehe Figur 2). Ferner umfasst der zweite Gehäuseteil 18 eine Mehrzahl von Bohrungen 20. Diese dienen in bekannter Weise zum Verbinden der Hauptbremszylinderanordnung 10 mit einem Bremsflüssigkeitsreservoir (nicht gezeigt).

Ferner umfasst der zweite Gehäuseteil 18 einen Kopplungsbereich 22 zum Koppeln der Hauptbremszylinderanordnung 10 mit einer nicht dargestellten elektromechanischen Bremsaktuatoreneinheit. Konkret umfasst der zweite Kopplungsbereich 22 einen Verschraubungsbereich 23, der mit einem vergleichweise großen Durchmesser dimensioniert ist und in den ein korrespondierender Verschraubungsbereich eines Elektromotors einschraubbar ist, welcher eine nachgeschaltete elektromechanische Bremsaktuatoreneinheit antreibt. Die elektromechanische Bremsaktuatoreneinheit wirkt ferner in bekannter Weise auf beide Bremskreise ein um die angeschlossenen Radbremsen gemäß des vom Fahrer gewünschten Umfangs zu betätigen.

Im Fall eines Systemversagens verbleibt die Möglichkeit zum Erzeugen von Bremsdrücken in einer Kraftfahrzeugbremsanlage über die verschiedenen Druckkammern der Hauptbremszylinderanordnung 10, wie beispielsweise aus den Dokumenten WO 2013/23953 A1 sowie DE 10 2010 040097 A1 bekannt.

In Figur 1 erkennt man ferner, dass das Krafteingangsglied 19 als mehrteiliges kolbenförmiges Element ausgebildet ist. Das Krafteingangsglied 19 umfasst an seinem von dem ersten Gehäuseteil 14 abgewandten Ende einen Kopplungsabschnitt 26 zur Kopplung mit einem nicht dargestellten Bremspedal. Wie nachfolgend noch ausführlich erläutert, ist das Krafteingangsglied 19 ferner entlang einer Verlagerungsachse V relativ zu der Gehäuseanordnung 12 verlagerbar und insbesondere in den ersten Gehäuseteil 14 einschiebbar und herausziehbar.

Schließlich zeigt Figur 1 mehrere Befestigungsbereiche 28 zur Befestigung der Hauptbremszylinderanordnung 10 in dem Motorraum eines Fahrzeugs (nicht gezeigt).

Figur 2 zeigt eine Schnittansicht durch die Hauptbremszylinderanordnung 10 aus Figur 1. Die Lage der Schnittebene verdeutlicht sich aus der Orientierung des Kopplungsabschnitts 26, wobei die Schnittebene ferner die Verlagerungsachse V enthält. Die Befestigungsbereiche 28 der Hauptbremszylinderanordnung 10 sind dabei nicht vollständig abgebildet.

Aus Figur 2 wird zunächst erneut der zweiteilige Aufbau der Gehäuseanordnung 12 ersichtlich. Im Detail erkennt man den ersten Gehäuseteil 14, der separat von dem zweiten Gehäuseteil 18 ausgebildet, jedoch mit diesem über wenigstens einen Schraubbolzen 30 verschraubt ist. Dabei liegen der erste und zweite Gehäuseteil 14,18 über einander zugewandte Stirnflächen 32 aneinander an. Die Stirnflächen 32 bilden jeweils einen Schnittstellenbereich des ersten und zweiten Gehäuseteils 14,18, über den die Gehäuseteile 14,18 miteinander verbindbar sind. Somit stellen die Stirnflächen 32 auch einen Schnittstellenbereich der gesamten Gehäuseanordnung 12 der Hauptbremszylinderanordnung 10 dar.

Der erste Gehäuseteil 14 ist mehrteilig aufgebaut und weist an seinem dem Kopplungsabschnitt 26 des Krafteingangsgliedes 19 zugewandten Ende einen Deckelabschnitt 34 auf. Dieser wird durch ein Deckelelement 35 gebildet, das separat von einem massiven und gusstechnisch hergestellten Hauptgehäuseelement 36 des ersten Gehäuseteils 14 ausgebildet ist. Das Hauptgehäuseelement 36 weist den Stirnflächenbereich 32 des ersten Gehäuseteils 14 auf und das Deckelelement 35 und das Hauptgehäuseelement 36 sind aneinander befestigt. Das Deckelelement 35 umfasst ferner eine Eingangsöffnung 36 für das Krafteingangsglied 19, wobei die Eingangsöffnung 36 die Verlagerungsachse V umschließt. Das Deckelelement 35 überspannt sowohl einen Abschnitt des Krafteingangsgliedes 19 als auch eines nachfolgend erläuterten rechten Kolbens 44 einer Kolbenanordnung 40. Dabei definiert das Deckelelement 35 eine Eingangskammer 37, über die das Krafteingangsglied 19 in die Gehäuseanordnung 12 eintritt und innerhalb derer das Krafteingangsglied 19 mit der Kolbenanordnung 40 gekoppelt wird.

In Figur 2 erkennt man ferner eine Kolbenanordnung 40. Diese umfasst eine langgestreckte Zylinderbohrung 42, die sich entlang der Verlagerungsachse V durch beide Gehäuseteile 14,18 erstreckt. In der Zylinderbohrung 42 sind zwei Kolben 44 aufgenommen, die jeweils eine Druckkammer 17 mit der Zylinderbohrung 42 begrenzen. Die Kolben 44 sind innerhalb der Zylinderbohrung 42 entlang der Verlagerungsachse V verlagerbar, sodass das Volumen der jeweils zugeordneten Druckkammern variierbar ist. Hierüber können Drücke erzeugt und über nicht dargestellte und mit den jeweiligen Druckkammern 17 verbundene Druckkreise an die zugeordneten Pedalgegenkraftsimulatoren [Brake-by-Wire] oder bei einem Systemversagen unmittelbar an die Bremskreisläufe eines Fahrzeugs weitergeleitet werden.

In Figur 2 erkennt man ferner, dass die Kolben 44 über mehrere Dichtungen 46 in der Zylinderbohrung 42 aufgenommen sind. Aus Darstellungsgründen sind aber nur ausgewählte Dichtungen 46 mit einem entsprechenden Bezugszeichen versehen.

Ferner erkennt man, dass die Kolbenanordnung 40 mehrere Rückstellfedern 48, umfasst mittels denen die Kolben 44 sich aneinander sowie an einem Zylinderboden 50 der Zylinderbohrung 42 abstützen. Über diese Rückstellfedern 50 sind die Kolben 44 in ihre in Figur 2 gezeigte Ausgangsstellung oder, mit anderen Worten, bremsinaktive Ruheposition vorgespannt. Zum Erzeugen eines Druckes werden die Kolben 44 hingegen entlang der Verlagerungsachse V in Figur 2 nach links verlagert, also in Richtung des Zylinderbodens 50. Insgesamt ist die Kolbenanordnung 40 demnach in bekannter Weise nach Tandemzylinder-Bauart ausgebildet.

Das Krafteingangsglied 19 erstreckt sich durch die Eingangsöffnung 36 in eine axiale Sacklochbohrung 52 in dem in Figur 2 rechten Kolben 44 hinein. Dort ist ein dem Kolben 44 zugewandtes Ende des Krafteingangsgliedes 19 mit einer Aufnahmehülse 54 des rechten Kolbens 44 verstemmt. Folglich ist eine Verlagerungsbewegung des Krafteingangsgliedes 19 auf den rechten und über die Rückstellfedern 48 auch auf den linken Kolben 44 aus Figur 2 übertragbar.

In die Sacklochbohrung 52 ist ferner eine Mitnehmerscheibe 56 eingeschraubt. Diese weist einen größeren Außendurchmesser auf als der rechte Kolben 44. Zwischen der Mitnehmerscheibe 56 und einem gegenüberliegenden Stirnflächenbereich des Hauptgehäuseelements 36 ist eine weitere Rückstellfeder 48 angeordnet. Diese nimmt den rechten Kolben 44 im Wesentlichen koaxial auf und erstreckt sich entlang der Verlagerungsachse V. Bei einer Verlagerung des Kolbens 44 in Figur 2 nach links wird auch diese Rückstellfeder 48 komprimiert und unterstützt somit eine Rückbewegung der Kolbenanordnung 40 in die in Figur 2 gezeigte Ausgangsstellung.

Die Mitnehmerscheibe 56 weist einen Kopplungsabschnitt 58 auf, über den sie mit einem stabförmigen Positionsgeberelement 60 gekoppelt. Das Positionsgeberelement 60 weist eine Längsachse L auf, die sich parallel zu der Verlagerungsachse V erstreckt. Ferner weist das Positionsgeberelement 60 einen im Wesentlichen kreisrunden Querschnitt mit einem in den Endbereichen variierendem Durchmesser auf. Das Koppeln des Positionsgeberelements 60 mit der Kopplungsanordnung 58 erfolgt über ein erstes Ende 62 des Positionsgeberelements 60, wobei dieses erste Ende 62 über eine Rastverbindung mit dem Kopplungsabschnitt 58 der Mitnehmerscheibe 56 verbunden ist.

Der Positionsgeberelement 60 erstreckt sich ausgehend von der Mitnehmerscheibe 56 durch die Eingangskammer 37 in einen Aufnahmebereich 64 hinein.

Dieser umfasst eine langgestreckte Bohrung, die sich entlang der Längsachse L des Positionsgeberelements 60 und somit parallel zu der Verlagerungsachse V erstreckt. Die genaue Erstreckung des Aufnahmebereichs 64 ist in Figur 2 nur teilweise ersichtlich und abschnittsweise strichliniert dargestellt. Weitere diesbezügliche Details ergeben sich aber aus den nachfolgenden Figuren.

Der Aufnahmebereich 64 erstreckt sich durch beide Gehäuseteile 14,18 und mündet in dem zweiten Gehäuseteil 18 in den Kopplungsbereich 22 für den nicht dargestellten Elektromotor. In diesem Kopplungsbereich 22 ist ferner eine lediglich die Antriebswelle der Elektromotor umgebende Erfassungseinheit 66 [Drehwinkelsensor]angeordnet, die einen Magnetfeldsensor umfasst (nicht gezeigt).

Man erkennt, dass ein zweites Ende 68 des Positionsgeberelements 60 aus dem Aufnahmebereich 64 hervorsteht und ebenfalls in dem zweiten Gehäuseteil 18 angeordnet ist. Dieses zweite Ende 68 dient zur mechanischen Kopplung an die Erfassungseinheit 66 insbesondere zur Umwandlung einer linearen in eine rotatorische Bewegung der Erfassungseinrichtung.

Zusammengefasst ist es somit möglich, Bewegungen des Positionsgeberelements 60 mittels der Erfassungseinheit 66 zu detektieren. Diese Bewegungen des Positionsgeberelements 60 deuten aufgrund der Kopplung mit der Kolbenanordnung 40 sowie dem Krafteingangsglied 19 über die Mitnehmerscheibe 36 auf eine Bremspedalbetätigung durch den Fahrer hin. Anders ausgedrückt geht eine Bremspedalbetätigung mit einer Verlagerung des Krafteingangsgliedes 19 und der damit gekoppelten Kolbenanordnung 40 in Figur 2 nach links entlang der Verlagerungsachse V einher. Gleichzeitig wird auch das Positionsgeberelement 60 nach Maßgabe dieser Verlagerung nach links bewegt, wobei die Verschiebung des zweiten Endes 68 entlang der Verlagerungsachse V von der Erfassungseinheit 66 erfasst wird. Diese Information kann in bekannter Weise von nicht dargestellten Steuereinheiten ausgewertet werden, um auf das Vorliegen sowie das Ausmaß eines Bremswunsches des Fahrers zu schließen und nach deren Maßgabe die elektromechanische Bremsaktuatoreneinhheit anzusteuern .

Die gezeigte Ausführungsform zeichnet sich ferner dadurch aus, dass das erste Ende 62 des Positionsgeberelements 60 in einem ersten Gehäusebereich F angeordnet ist, der von dem ersten Gehäuseteil 14 umfasst wird. Gleiches gilt für zumindest einen Abschnitt des Krafteingangsgliedes 19 sowie des in Figur 2 rechten Kolbens 44, wobei Letzterer infolge einer Bremsbetätigung auch in den zweiten Gehäuseteil 18 hinein verschiebbar ist.

Das zweite Ende 68 des Positionsgeberelements 60 ist hingegen in einem zweiten Gehäusebereich S angeordnet, der von dem zweiten Gehäuseteil 18 umfasst wird. Dieser zweite Gehäusebereich S umfasst ferner die Erfassungseinheit 66 sowie einen Wechselwirkungsbereich zwischen der Erfassungseinheit 66 und dem zweiten Ende 68 des Positionsgeberelements 60. Zusammengefasst erstreckt sich das Positionsgeberelement 60 ausgehend von beiden Gehäusebereichen F,S durch beide Gehäuseteile 14,18 hindurch, wobei die Gehäusebereiche F,S von dem Aufnahmebereich 64 verbunden werden.

Der zweite Gehäusebereich S bildet ferner nach der Montage des Elektromotors eine von der Umgebung im Wesentlichen isolierbare Kammer, in dem die Erfassungseinheit 66 angeordnet ist.

Wie aus Figur 2 ersichtlich, erstreckt sich ein weiteres Element in Form einer Hülse 70 (im Folgenden: Führungshülse 70) ebenfalls durch beide Gehäuseteile 14,18 hindurch. Die Führungshülse 70 nimmt das Positionsgeberelement 60 abschnittsweise auf und stellt eine Führungswirkung während der Verlagerung des Positionsgeberelements 60 bereit. Die Anordnung des Positionsgeberelements 60 innerhalb der Führungshülse 70 ist aufgrund der Lage der Schnittebene in Figur 2 nur teilweise zu erkennen, verdeutlicht sich jedoch aus den nachstehenden Figuren.

Hingegen erkennt man in Figur 2 bereits eine erste Dichtungsanordnung 72, die an einer Außenumfangsfläche der Führungshülse 70 angeordnet ist. Diese Dichtungsanordnung 72 dichtet den zweiten Gehäusebereich F,S fluidisch von der Umgebung ab, stellt aber ebenso eine abdichtende Wirkung entlang des Aufnahmebereichs 64 bereit, sodass zum Beispiel keine Luft oder Flüssigkeiten über den Aufnahmebereich 64 zwischen den Gehäusebereichen F,S austauschbar ist.

Im Rahmen des gezeigten Beispiels ist die abdichtende Wirkung insbesondere dahingehend relevant, dass hierdurch ein zusätzlicher Schutz der Erfassungseinheit 66 und somit eine zuverlässige Bremsbetätigungserfassung über eine lange Lebensdauer der Hauptbremszylinderanordnung 10 bereitgestellt werden kann. Genauer gesagt wurde gemäß der vorliegenden Ausführungsform erkannt, dass es insbesondere nach einer längeren Betriebsdauer zu Leckagen von Bremsflüssigkeit über die Dichtungen 46 in die Eingangskammer 37 kommen kann. Mittels der ersten Dichtungsanordnung 72 der Führungshülse 70 und insbesondere der nachfolgend erläuterten weiteren Dichtungsanordnung 92,94 wird jedoch verhindert, dass diese Bremsflüssigkeit über den Aufnahmebereich 64 zu der Erfassungseinheit 66 gelangt und diese beschädigt.

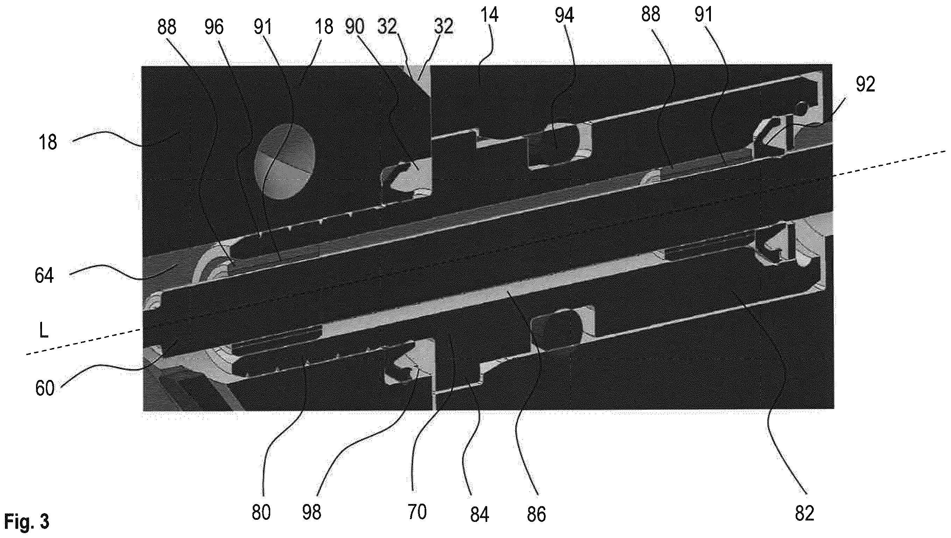

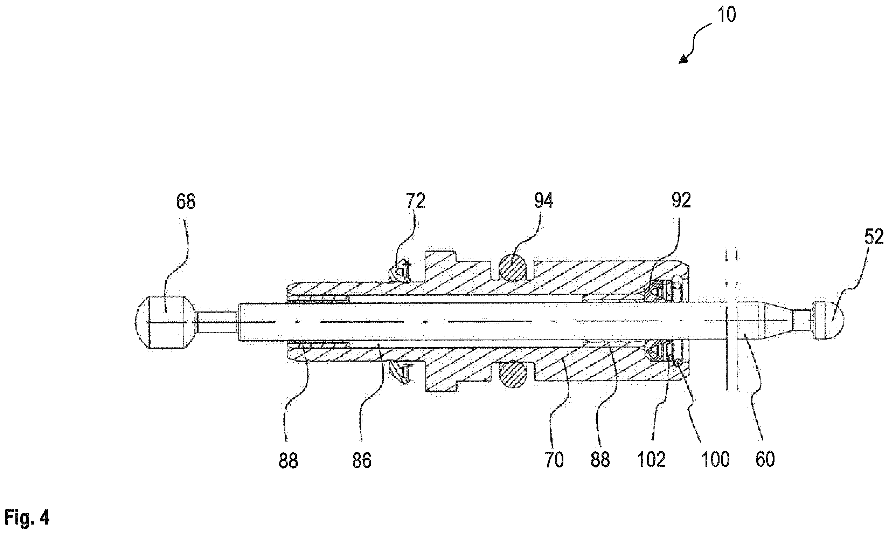

Im Folgenden wird die Gestaltung der Führungshülse 70 anhand der Figuren 3 und 4 näher erläutert. Dabei stellt Figur 3 eine Detailansicht der Schnittansicht von Figur 2 im Bereich der Führungshülse 70 dar, wohingegen Figur 4 die Führungshülse 70 sowie das Positionsgeberelement 60 als Schnittdarstellung in Einzelteilansicht zeigt.

In diesen Figuren erkennt man zunächst erneut die längliche Erstreckung der Führungshülse 70 entlang der Längsachsen L des Positionsgeberelements 60 sowie des Aufnahmebereichs 64. Ferner erkennt man den Schnittstellenbereich der Gehäuseanordnung 12, der durch die Stirnflächen 32 der beiden Gehäuseteile 14, 18 definiert wird. Die Führungshülse 70 umfasst dabei einen in Figur 3 linken Abschnitt 80, der in dem zweiten Gehäuseteil 18 angeordnet ist, sowie einen in Figur 3 rechten Abschnitt 82, der in dem ersten Gehäuseteil 14 angeordnet ist. Die Führungshülse 70 ist ferner im Wesentlichen zylindrisch ausgebildet, wobei ein Außendurchmesser aufgrund mehrerer Durchmesserstufen entlang der Länge der Führungshülse 70 variiert.

Genauer gesagt umfasst die Führungshülse 70 eine Hauptdurchmesserstufe 84, die einen größten Außendurchmesser der Führungshülse 70 festlegt. Die Hauptdurchmesserstufe 84 stellt gleichzeitig einen Anschlag bereit, über den eine Einschubtiefe der Führungshülse 70 in den Aufnahmebereich 64 und insbesondere in den ersten Gehäuseteil 14 begrenzt wird. Anschließend kann der zweite Gehäuseteil 18 über den zunächst von dem ersten Gehäuseteil 14 hervorstehenden linken Abschnitt 80 der Führungshülse 70 geschoben werden, bis die Stirnflächen 32 in Anlage geraten.

Die Führungshülse 70 weist ferner eine Durchgangsbohrung 86 auf, die sich axial entlang der Längsachse L durch die Führungshülse 70 hindurch erstreckt. Das Positionsgeberelement 60 wird durch diese Bohrung 86 hindurchgeführt und ist in dieser aufgenommen. In der Durchgangsbohrung 86 sind ferner zwei axial voneinander beabstandete Gleitbuchsen 88 angeordnet, die eine Gleitbeschichtung 91 umfassen. Die Gleitbeschichtung 91 liegt an einer Außenumfangsfläche des Positionsgeberelements 60 an, sodass das Positionsgeberelement 60 relativ zu der ortsfesten Führungshülse 70 unter verminderten Reibungskräften verschieblich geführt ist.

An der Außenumfangsfläche des linken Abschnitts 80 der Führungshülse 70 ist ferner die erste Dichtungsanordnung 72 angeordnet. Diese ist in einer Ausnehmung 90 in dem ersten Gehäuseteil 18 aufgenommen, die von dem Aufnahmebereich 64 umfasst wird. Die Ausnehmung 90 erstreckt sich bis zu der Stirnfläche 32 des zweiten Gehäuseteils 18 und geht in diese über.

In dem unteren Bereich von Figur 3 erkennt man, dass die Stirnfläche 32 des zweiten Gehäuseteils 18 ausgehend von der Ausnehmung 90 einen zurückgestuften Bereich umfasst, der einen definierten Zwischenraum zwischen den Stirnflächen 32 der beiden Gehäuseteile 14,18 bildet. Hierdurch wird ein Entlüftungskanal 98 bereitgestellt, der eine fluidleitende Verbindung der Ausnehmung 90 zu der Umgebung bereitstellt. Ein ungefährer Verlauf des Entlüftungskanals 98 ist auch in Figur 2 strichliniert angedeutet.

Die erste Dichtungsanordnung 72 ist, wie vorstehend beschrieben, primär dazu vorgesehen, den zweiten Gehäusebereich S von der Umgebung abzukoppeln. Prinzipiell ist die erste Dichtungsanordnung 72 aber ebenso dazu ausgebildet, den ersten und zweiten Gehäusebereich 14, 18 fluidisch voneinander abzudichten. Genauer gesagt wird ein Überströmen der Führungshülse 70 entlang deren Außenseite verhindert und somit ein Übertritt von Flüssigkeit oder Luft von dem ersten in den zweiten Gehäusebereich 14, 18 über den Aufnahmebereich 64 verhindert.

Dies wird zusätzlich durch eine zweite Dichtungsanordnung 92 unterstützt, die in der Durchgangsbohrung 86 der Führungshülse 70 aufgenommen ist und an einer Außenumfangsfläche des Positionsgeberelements 60 anliegt. Die zweite Dichtungsanordnung 92 vermindert das Risiko, dass entlang der Außenumfangsfläche des Positionsgeberelements 60 Flüssigkeit durch die Führungshülse 70 hindurch in den zweiten Gehäusebereich 18 gelangt.

Schließlich umfasst die Führungshülse 70 noch eine dritte Dichtungsanordnung 94, die in einer Umlaufnut in der Außenumfangsfläche der Führungshülse 70 angeordnet ist. Auch diese stellt eine fluidisch abdichtende Wirkung bereit, um zum Beispiel einen Flüssigkeitsübertritt über die Außenumfangsfläche der Führungshülse 70 zu verhindern.

In Zusammenschau erkennt man ferner, dass die ersten und zweiten Dichtungsanordnungen 72,92 als Lippendichtungen ausgebildet sind, wohingegen die dritte Dichtungsanordnung 94 in Form eines O-Rings bereitgestellt ist. Die zweiten und dritten Dichtungsanordnungen 92,94 sind zudem in dem ersten Gehäuseteil 14 und nahe dem ersten Gehäusebereich F angeordnet. Die erste Dichtungsanordnung 72 ist hingegen in dem zweiten Gehäuseteil 18 und nahe dem zweiten Gehäusebereich S angeordnet. Ausgehend von dem ersten Gehäusebereich F und entlang der Längsachse L in Richtung des zweiten Gehäuseteils 18 betrachtet, ist somit die zweite Dichtungsanordnung 92 vor der dritten Dichtungsanordnung 94 angeordnet, wobei die dritte Dichtungsanordnung wiederum vor der ersten Dichtungsanordnung 72 angeordnet ist.

In dem linken Abschnitt 80 der Führungshülse 70, welcher der in Figur 3 nicht dargestellten Erfassungseinheit 66 allgemein zugewandt ist, ist ferner ein Fluidkanal 96 ausgebildet, der als ein Luftkanal dient. Der Fluidkanal 96 ist als eine schraubenlinienförmige Nut entlang der Außenumfangsfläche der Führungshülse 70 bereitgestellt. Diese Nut umläuft die Außenumfangsfläche mehrfach in Umfangsrichtung und verläuft ferner axial in Richtung der ersten Dichtungsanordnung 72.

Der Fluidkanal 96 stellt einen Freiraum bereit, durch den Luft aus dem zweiten Gehäusebereich S über den Aufnahmebereich 64 zu der ersten Dichtungsanordnung 72 geleitet wird. Die erste Dichtungsanordnung 72 ist dazu ausgebildet, einem entsprechenden Luftdruck in dem zweiten Gehäusebereich S, der über den Fluidkanal 96 auch auf die erste Dichtungsanordnung 72 einwirkt, nur bis zu einem vorbestimmten Schwellenwert standzuhalten. Wird dieser Schwellenwert überschritten, gibt die erste Dichtungsanordnung 72 nach, sodass Luft aus dem zweiten Gehäusebereich S die erste Dichtungsanordnung 72 überströmen kann. Folglich kann diese Luft über die Ausnehmung 90 in den Entlüftungskanal 98 gelangen und hierüber in die Umgebung geleitet werden.

Im Ergebnis kann der zweite Gehäusebereich S bei Auftreten eines den Schwellenwert übersteigenden Überdruckes somit selektiv entlüftet werden. Sobald der Schwellenwert wieder unterschritten wird, erlangt die erste Dichtungsanordnung 72 jedoch ihre dichtende Wirkung wieder, sodass die luftleitende Verbindung zur Umgebung unterbrochen ist.

Die zweite und dritte Dichtungsanordnung 92, 94 sind hingegen dazu ausgelegt, einem höheren Schwellenwert bzw. -druck standzuhalten als die erste Dichtungsanordnung 72. Somit sind diese dazu ausgelegt, selbst bei einem Überdruck in dem zweiten Gehäusebereich S ihre dichtende Funktion aufrechtzuerhalten, während parallel dazu die erste Dichtungsanordnung 72 selektiv überströmt werden kann.

Die Entlüftungsfunktion des vorliegenden Ausführungsbeispiels stellt eine zusätzliche Maßnahme dar, um die Zuverlässigkeit der Positionserfassung zu schützen. Beispielsweise werden auch hierdurch Beschädigung der Erfassungseinheit 66 vermieden, die ansonsten bei einem in dem zweiten Gehäusebereiches S auftretenden Überdruck entstehen könnten.

Abschließend wird auf Figur 4 verwiesen, die eine weitere Schnittdarstellung der Führungshülse 70 mitsamt dem darin aufgenommenen Positionsgeberelement 60 zeigt. Man erkennt erneut die in der Durchgangsbohrung 82 aufgenommenen Gleitbuchsen 88. Ebenso verdeutlicht sich die Anordnung und Position der Dichtungsanordnungen 72, 92, 94. Diese werden jeweils nur durch ein einzelnes Dichtungselement gebildet. Ferner bilden sie gemeinsam ein Dichtungssystem, das an der Führungshülse 70 angeordnet ist.

Weiterhin erkennt man, dass die axiale Position der zweiten Dichtungsanordnung 92, die innerhalb der Durchgangsbohrung 86 angeordnet ist, durch einen Sicherungsring 100 samt Zwischenscheibe 102 gesichert ist. Man beachte, das die zweite Dichtungsanordnung 92 ausgehend von dem ersten Gehäusebereich F in Richtung des zweiten Gehäusebereichs S betrachtet vor den Gleitbuchsen 88 angeordnet ist. Somit werden die Gleitbuchsen 88 vor einem Kontakt zu etwaigen Leckagestömen von Bremsflüssigkeit geschützt. Diese Anordnung der zweiten Dichtungsanordnung 92 stellt einen gesonderten Aspekt der vorliegenden Offenbarung unabhängig von den weiteren Merkmalen des Ausführungsbeispiels dar.

Schließlich verdeutlicht sich noch einmal die Gestaltung des ersten und zweiten Endes 52, 68 des Positionsgeberelements 60, wobei das Ende 68 derart ausgestaltet ist, dass dieses während der Montage in einen Kopplungsbereich am Erfassungselement 66 derart eintauchen kann, dass es mit diesem nach Abschluss der Montage spielfrei wechselwirken kann.

## Patentansprüche

1. Hauptbremszylinderanordnung (10) für eine Kraftfahrzeugbremsanlage, umfassend:
- wenigstens einen Kolben (44), der entlang einer Verlagerungsachse (V) verlagerbar ist und gemeinsam mit einer Gehäuseanordnung (12) eine Druckkammer begrenzt;
- ein Krafteingangsglied (19), das nach Maßgabe einer Bremspedalbetätigung verlagerbar und mit dem Kolben (44) für eine gemeinsame Verlagerung gekoppelt oder koppelbar ist;
- ein langgestrecktes Positionsgeberelement (60), das nach Maßgabe einer Betätigung des Krafteingangsgliedes (18) verlagerbar ist;
- eine Erfassungseinheit (66), die dazu ausgebildet ist, eine Verlagerung des Positionsgeberelements (60) zu erfassen; und
- einen Aufnahmebereich (64), der dazu ausgebildet ist, das Positionsgeberelement (60) zumindest abschnittsweise aufzunehmen,
**dadurch gekennzeichnet, dass** ein erstes Ende (62) des Positionsgeberelements (60) in einem ersten Gehäusebereich (F) der Hauptbremszylinderanordnung (10) angeordnet ist und die Erfassungseinheit (66) in einem zweiten Gehäusebereich (S) der Hauptbremszylinderanordnung (10) angeordnet ist,
wobei der Aufnahmebereich (64) den ersten und zweiten Gehäusebereich (F, S) miteinander verbindet, und
wobei die Hauptbremszylinderanordnung (10) ferner wenigstens eine erste Dichtungsanordnung (72, 94) umfasst, die in dem Aufnahmebereich (64) sowie in einem Fluidpfad zwischen dem ersten und zweiten Gehäusebereich (F, S) angeordnet ist.

2. Hauptbremszylinderanordnung (10) nach Anspruch 1,
wobei der erste und zweite Gehäusebereich (F, S) zumindest teilweise in separaten ersten und zweiten Gehäuseteilen (14, 18) ausgebildet sind.

3. Hauptbremszylinderanordnung (10) nach einem der vorangehenden Ansprüche,
wobei die erste Dichtungsanordnung (72, 94) dazu ausgebildet ist, den zweiten Gehäusebereich (S) ab Überschreiten eines Schwellendrucks fluidleitend mit der Umgebung zu verbinden.

4. Hauptbremszylinderanordnung (10) nach Anspruch 3,
wobei das fluidleitenden Verbinden mit der Umgebung über einen Entlüftungskanal (98) erfolgt.

5. Hauptbremszylinderanordnung (10) nach Anspruch 3 oder 4,
wobei der Entlüftungskanal (98) von zumindest einem der beiden Gehäuseteile (14, 18) begrenzt wird.

6. Hauptbremszylinderanordnung (10) nach Anspruch 4 oder 5,
wobei die erste Dichtungsanordnung (72, 94) in einer Ausnehmung (90) aufgenommen ist, die mit dem Entlüftungskanal (98) fluidleitend verbunden ist.

7. Hauptbremszylinderanordnung (10) nach einem der vorangehenden Ansprüche,
wobei die Hauptbremszylinderanordnung (10) ferner eine zweite Dichtungsanordnung (92) umfasst, die dazu ausgebildet ist, den ersten und zweiten Gehäusebereich (F, S) fluidisch voneinander abzudichten.

8. Hauptbremszylinderanordnung (10) nach Anspruch 7,
wobei die zweite Dichtungsanordnung (92) dazu ausgelegt ist, einem größeren Druck standzuhalten als die erste Dichtungsanordnung (72, 94).

9. Hauptbremszylinderanordnung (10) nach Anspruch 7 oder 8,
wobei die zweite Dichtungsanordnung (92) in einem den ersten Gehäusebereich umfassenden Gehäuseteil (14) und die erste Dichtungsanordnung (72, 94) in einem den zweiten Gehäusebereich (S) umfassenden Gehäuseteil (18) angeordnet ist.

10. Hauptbremszylinderanordnung (10) nach einem der vorangehenden Ansprüche,
wobei die erste Dichtungsanordnung (72, 94) an einer Hülse (70) angeordnet ist.

11. Hauptbremszylinderanordnung (10) nach Anspruch 10,
wobei die Hülse (70) sich durch beide Gehäuseteile (14, 18) erstreckt.

12. Hauptbremszylinderanordnung (10) nach Anspruch 10 oder 11,
wobei die Hülse (70) einen Fluidkanal (96) umfasst, der sich von einem dem zweiten Ende (68) des Positionsgeberelements (60) zugewandten Bereich der Hülse (70) bis wenigstens zu der ersten Dichtungsanordnung (72, 94) erstreckt.

13. Hauptbremszylinderanordnung (10) nach Anspruch 12,
wobei der Fluidkanal (96) zumindest abschnittsweise an einer Außenumfangsfläche der Hülse (70) ausgebildet ist, und insbesondere zumindest abschnittsweise schraubenlinienförmig ausgebildet ist.

14. Hauptbremszylinderanordnung (10) nach Anspruch 13,
wobei zumindest ein Endbereich des Fluidkanals (96) sich in wenigstens einen von dem Aufnahmebereich (64) und dem zweiten Gehäusebereich (S) hinein erstreckt.

15. Hauptbremszylinderanordnung (10) nach einem der Ansprüche 10 bis 14,
wobei die Hülse (70) ferner wenigstens einen Gleitabschnitt (91) umfasst, entlang dem das Positionsgeberelement (60) verlagerbar geführt ist.

## Claims

1. Master brake cylinder assembly (10) for a motor vehicle brake system, comprising:
- at least one piston (44) which is displaceable along an extension axis (V) and, conjointly with a housing assembly (12), delimits a pressure chamber;
- a force input member (19) which is displaceable as a function of a brake-pedal activation and for conjoint displacement is coupled, or able to be coupled, to the piston (44);
- an elongate position encoder element (60) which is displaceable as a function of an activation of the force input member (18);
- a detection unit (66) which is configured for detecting a displacement of the position encoder element (60); and
- a receptacle region (64) which is configured for receiving the position encoder element (60) at least in portions,
**characterized in that** a first end (62) of the position encoder element (60) is disposed in a first housing region (F) of the master brake cylinder assembly (10), and the detection unit (66) is disposed in a second housing region (S) of the master brake cylinder assembly (10),
wherein the receptacle region (64) interconnects the first housing region (F) and the second housing region (S); and
wherein the master brake cylinder assembly (10) furthermore comprises at least one first seal assembly (72, 94) which is disposed in the receptacle region (64) as well as in a fluid path between the first housing region (F) and the second housing region (S).

2. Mater brake cylinder assembly (10) according to Claim 1, wherein the first housing region (F) and the second housing region (S) are at least in part configured in separate first and second housing parts (14, 18).

3. Master brake cylinder assembly (10) according to one of the preceding claims, wherein the first seal assembly (72, 94) upon exceeding a threshold pressure is configured for fluidically connecting the second housing region (S) to the environment.

4. Master brake cylinder assembly (10) according to Claim 3, wherein the fluidic connection to the environment takes place by way of a ventilation duct (98) .

5. Master brake cylinder assembly (10) according to Claim 3 or 4, wherein the ventilation duct (98) is delimited by at least one of the two housing parts (14, 18).

6. Master brake cylinder assembly (10) according to Claim 4 or 5, wherein the first seal assembly (72, 94) is received in a recess (90) which is fluidically connected to the ventilation duct (98).

7. Master brake cylinder assembly (10) according to one of the preceding claims, wherein the master brake cylinder assembly (10) furthermore comprises a second seal assembly (92) which is configured for fluidically sealing the first housing region (F) and the second housing region (S) in relation to one another.

8. Master brake cylinder (10) according to Claim 7, wherein the second seal assembly (92) is conceived for withstanding a higher pressure than the first seal assembly (72, 94).

9. Master brake cylinder assembly (10) according to Claim 7 or 8, wherein the second seal assembly (92) is disposed in a housing part (14) that comprises the first housing region, and the first seal assembly (72, 94) is disposed in a housing part (18) that comprises the second housing region (S).

10. Master brake cylinder assembly (10) according to one of the preceding claims, wherein the first seal assembly (72, 94) is disposed on a sleeve (70).

11. Master brake cylinder assembly (10) according to Claim 10, wherein the sleeve (70) extends through both housing parts (14, 18).

12. Master brake cylinder assembly (10) according to Claim 10 or 11, wherein the sleeve (70) comprises a fluid duct (96) which from a region of the sleeve (70) that faces the second end (68) of the position encoder element (60) extends at least to the first seal assembly (72, 94).

13. Master brake cylinder assembly (10) according to Claim 12, wherein the fluid duct (96) at least in portions is configured on an external circumferential face of the sleeve (70), and at least in portions is in particular configured so as to be helical.

14. Master brake cylinder assembly (10) according to Claim 13, wherein at least one end region of the fluid duct (96) extends into at least the receptacle region (64) and the second housing region (S).

15. Master brake cylinder assembly (10) according to one of Claims 10 to 14, wherein the sleeve (70) furthermore comprises at least one friction portion (91) along which the position encoder element (60) is guided in a displaceable manner.

## Revendications

1. Ensemble formant maître-cylindre de frein (10) destiné à un système de freinage de véhicule automobile, ledit ensemble comprenant :
- au moins un piston (44) qui est déplaçable le long d'un axe de déplacement (V) et qui délimite, conjointement avec un ensemble formant boîtier (12), une chambre de pression ;
- un élément d'injection de force (19) qui peut être déplacé en fonction de l'actionnement d'une pédale de frein et qui est accouplé ou peut être accouplé au piston (44) pour un déplacement conjoint ;
- un élément transmetteur de position allongé (60) qui peut être déplacé en fonction de l'actionnement de l'élément d'injection de force (18) ;
- une unité de détection (66) qui est adaptée pour détecter un déplacement de l'élément transmetteur de position (60) ; et
- une zone de réception (64) qui est adaptée pour recevoir l'élément transmetteur de position (60) au moins par endroits,
**caractérisé en ce qu'**une première extrémité (62) de l'élément transmetteur de position (60) est disposée dans une première zone de boîtier (F) de l'ensemble formant maître-cylindre de frein (10) et l'unité de détection (66) est disposée dans une deuxième zone de boîtier (S) de l'ensemble formant maître-cylindre de frein (10),
la zone de réception (64) reliant les première et deuxième zones de boîtier (F, S) l'une à l'autre, et l'ensemble formant maître-cylindre de frein (10) comprenant en outre au moins un premier ensemble d'étanchéité (72, 94) qui est disposé dans la zone de réception (64) et dans un trajet de fluide entre les première et deuxième zones de boîtier (F, S).

2. Ensemble formant maître-cylindre de frein (10) selon la revendication 1,
les première et deuxième zones de boîtier (F ; S) étant au moins partiellement formées dans des première et deuxième parties de boîtier séparées (14, 18).

3. Ensemble formant maître-cylindre de frein (10) selon l'une des revendications précédentes, le premier ensemble d'étanchéité (72, 94) étant conçu pour relier fluidiquement la deuxième zone de boîtier (S) à l'environnement dès qu'une pression seuil est dépassée.

4. Ensemble formant maître-cylindre de frein (10) selon la revendication 3,
la liaison fluidique avec l'environnement étant effectuée par le biais d'un conduit de purge (98).

5. Ensemble formant maître-cylindre de frein (10) selon la revendication 3 ou 4,
le canal de purge (98) étant délimité par l'une au moins des deux parties de boîtier (14, 18).

6. Ensemble formant maître-cylindre de frein (10) selon la revendication 4 ou 5,
le premier ensemble d'étanchéité (72, 94) étant reçu dans un évidement (90) qui est relié fluidiquement au canal de purge (98).

7. Ensemble formant maître-cylindre de frein (10) selon l'une des revendications précédentes, l'ensemble formant maître-cylindre de frein (10) comprenant en outre un deuxième ensemble d'étanchéité (92) qui est conçu pour étanchéifier fluidiquement les première et deuxième zones de boîtier (F, S) l'une de l'autre.

8. Ensemble formant maître-cylindre de frein (10) selon la revendication 7,
le deuxième ensemble d'étanchéité (92) étant conçu pour résister à une pression supérieure à celle du premier ensemble d'étanchéité (72, 94).

9. Ensemble formant maître-cylindre de frein (10) selon la revendication 7 ou 8,
le deuxième ensemble d'étanchéité (92) étant disposé dans une partie de boîtier (14) comprenant la première zone de boîtier et le premier ensemble d'étanchéité (72, 94) étant disposé dans une partie de boîtier (18) comprenant la deuxième zone de boîtier (S).

10. Ensemble formant maître-cylindre de frein (10) selon l'une des revendications précédentes, le premier ensemble d'étanchéité (72, 94) étant disposé au niveau d'un manchon (70).

11. Ensemble formant maître-cylindre de frein (10) selon la revendication 10,
le manchon (70) s'étendant à travers les deux parties de boîtier (14, 18).

12. Ensemble formant maître-cylindre de frein (10) selon la revendication 10 ou 11,
le manchon (70) comprenant un canal de fluide (96) qui s'étend d'une zone du manchon (70), qui est dirigée vers la deuxième extrémité (68) de l'élément transmetteur de position (60), à au moins le premier ensemble d'étanchéité (72, 94).

13. Ensemble formant maître-cylindre de frein (10) selon la revendication 12,
le canal de fluide (96) étant formé au moins par endroits sur une surface circonférentielle extérieure du manchon (70), et en particulier étant conçu au moins par endroits sous la forme d'hélice.

14. Ensemble formant maître-cylindre de frein (10) selon la revendication 13,
au moins une zone d'extrémité du canal de fluide (96) s'étendant dans l'une au moins parmi la zone de réception (64) et la deuxième zone de boîtier (S).

15. Ensemble formant maître-cylindre de frein (10) selon l'une des revendications 10 à 14, le manchon (70) comprenant en outre au moins une portion coulissante (91) le long de laquelle l'élément transmetteur de position (60) est guidé de manière déplaçable.
